# FASCICULE DE BREVET EUROPEEN

(11) **EP 4 260 660 B1**
(45) Date de publication et mention de la délivrance du brevet: **06.05.2026**
(21) Numéro de dépôt: 21839365.0
(22) Date de dépôt: 10.12.2021
(51) Int. Cl.: H05B 45/18, H05B 45/56

(54) **PROCÉDÉ DE PILOTAGE POUR UNE SOURCE LUMINEUSE PIXÉLISÉE**
VERFAHREN ZUR STEUERUNG EINER PIXELIERTEN LICHTQUELLE
METHOD FOR CONTROLLING A PIXELATED LIGHT SOURCE

(30) Priorité: 11.12.2020 FR 2013081
(43) Date de publication de la demande: 18.10.2023
(73) Titulaire: Valeo Vision, 93012 Bobigny Cedex (FR)
(72) Inventeur: BEDDAR, Sidahmed, 93012 BOBIGNY Cedex (FR)
(74) Mandataire: Valeo Visibility
(86) Numéro de dépôt international: PCT/EP2021/085310
(87) Numéro de publication internationale: WO 2022/123059

(56) Documents cités:
- DE-T5- 112019 000 539
- US-A1- 2008 136 331
- US-A1- 2011 163 691
- US-A1- 2020 060 004

## Description

Cette invention est liée au domaine des systèmes d'éclairage de véhicules automobiles, et en particulier elle concerne de tels systèmes utilisant des sources pixélisées.

Une diode électroluminescente, LED, est un composant électronique semi-conducteur capable d'émettre de la lumière d'une longueur d'onde prédéterminée lorsqu'une tension électrique au moins égale à une valeur seuil est appliquée à ses terminaux. Au-delà de cette valeur seuil appelée tension directe, l'intensité du flux lumineux émis par une LED augmente en général avec l'intensité moyenne du courant électrique d'alimentation. Avec l'échauffement de la jonction semi-conductrice, l'intensité du courant électrique à tendance à augmenter à tension appliquée constante. Leur petite taille et leur faible consommation en électricité rendent les composants LED intéressants dans le domaine des modules lumineux pour véhicules automobiles. Des sources lumineuses de type LED peuvent par exemple être utilisées pour réaliser des signatures optiques distinctives en plaçant les composants le long de contours prédéterminés. En utilisant des composants LED, la réalisation de feux à fonctions lumineuses multiples est également facilitée. Le document US2020/060004 A1 divulgue les caractéristiques du préambule des revendications indépendantes.

Il est également connu d'utiliser des sources lumineuses pixellisées de différents types de technologies pour projeter ces faisceaux lumineux à partir de données d'image. Il s'agit par exemple de la technologie monolithique, suivant laquelle une pluralité importante de sources élémentaires de type diode électroluminescente, LED, équivalentes à des pixels, sont gravées dans un substrat semi-conducteur commun. Le substrat peut en outre comprendre des composants électroniques embarqués, tels que des circuits interrupteurs ou autres. Des connexions électriques intégrées permettent d'activer les pixels indépendamment les uns des autres. Il a notamment été proposé de piloter de telles sources lumineuse pixélisées en tension : en appliquant une tension électrique constante à une source lumineuse pixélisée, les pixels individuels peuvent être commandées par le biais d'un interrupteur par pixel, commandée par un signal binaire. Le signal de commande visant un pixel peut par exemple être un signal à modulation de largeur d'impulsion, PWM (« Pulse Width Modulation »), dont le rapport cyclique aura un impact direct sur l'intensité moyenne du courant électrique qui traverse le pixel, et donc sur son degré de luminosité.

Alternativement, une source lumineuse pixélisée peut également être pilotée en courant électrique. Chaque source lumineuse élémentaire qui réalise un pixel est associée à une source de courant dédiée. Ainsi, l'intensité du courant électrique qui traverse un pixel donné, et donc l'intensité lumineuse émise par ce pixel, peut être réglée de manière directe. En agissant sur un signal à modulation de largeur d'impulsion de type PWM, l'intensité moyenne du courant peut également être réduite pour une intensité de courant continue donnée.

Des sources lumineuses pixélisées peuvent être utilisées pour réaliser des fonctions « feux de route » (HB, « High Beam »), ou des fonctions complexes telles que l'ADB (« Adaptive Driving Beam ») ou autres. Pour des sources lumineuses pilotées en tension, il est généralement prévu de fournir une tension électrique d'alimentation ayant une valeur constante. Cependant, à tension constante, l'intensité du courant électrique qui traverse une jonction semi-conductrice, comme par exemple la jonction d'un pixel électroluminescent, augmente linéairement avec la température. La température de jonction augmente lorsqu'un courant électrique la traverse. Pour des pixels sollicités pendant une durée importante, il existe donc un risque d'emballement thermique : plus la jonction semi-conductrice est chauffée par le courant électrique qui la traverse, plus l'intensité du courant électrique augmente, jusqu'à ce que la jonction devienne défaillante ou est détruite de manière irréversible. Ce risque est plus prononcé pour des pixels d'une zone centrale de la source lumineuse pixellisée qui participent à une pluralité de fonctions lumineuses d'un véhicule, et qui sont donc sollicités plus régulièrement. Des défaillances dans cette zone peuvent mener à des défaillances visibles dans le faisceau lumineux projeté sur la route. Comme une mesure de température exacte par pixel n'est pour l'instant pas praticable, il est difficile de prévoir des points potentiellement en situation de surchauffe sur une source lumineuse pixellisée qui, en mode de fonctionnement est susceptible de projeter une série d'images différentes.

Dans le cas d'un pilotage en courant électrique, le risque d'emballement thermique est réduit. Cependant, un sur-échauffement important de chaque jonction semi-conductrice peut accélérer son vieillissement de manière prématurée, et augmenter le risque de défaillance.

L'invention a pour objectif de pallier à au moins un des problèmes posés par l'art antérieur. Plus précisément, l'invention a pour objectif de proposer un procédé de commande d'une source lumineuse pixellisée, qui permet d'éviter des risques liées au sur-échauffement des pixels élémentaires de la source.

Selon un premier aspect de l'invention, un procédé de commande d'une source lumineuse pixellisée pour un véhicule automobile est proposé dans la revendication 1.

Selon un autre aspect de l'invention, un ensemble lumineux pour un véhicule automobile est proposé dans la revendication 9.

En utilisant les mesures proposées par la présente invention, il devient possible de proposer un procédé de pilotage d'une source lumineuse pixellisée pour un véhicule automobile qui est pilotée en tension ou en courant, et qui permet d'éviter des risques liées au sur-échauffement des sources lumineuses élémentaire constitutives. Notamment, le risque d'emballement thermique des pixels élémentaires de la source ainsi que le risque de vieillissement prématuré est réduit de manière dynamique . En baissant la tension d'alimentation électrique, ou en réduisant l'intensité moyenne du courant électrique au niveau de chaque pixel lorsqu'une température seuil, correspondant de préférence à une intensité de courant seuil maximale, est dépassée, le procédé de pilotage protège les jonctions semi-conductrices des pixels de la source lumineuse pixellisée, pour augmenter leur durée de vie et pour éviter des défauts visibles au niveau d'un faisceau projeté sur la route. Un module lumineux implémentant le procédé de pilotage et de régulation thermique proposé incarne donc une solution plus durable et plus économique par rapport à des produits connus dans l'état de l'art.

D'autres caractéristiques et avantages de la présente invention seront mieux compris à l'aide de la description des exemples et des dessins parmi lesquels :
- [Fig.1] est un diagramme montrant les étapes principales d'un procédé selon un mode de réalisation préféré de l'invention ;
- [Fig.2] est une illustration schématisée d'un ensemble lumineux en accord avec un mode de réalisation préféré de l'invention ;
- [Fig.3] est une illustration schématisée de données d'image et d'une source lumineuse qui projette ces données d'image, y compris des capteurs de température, en accord avec un mode de réalisation préféré de l'invention ;
- [Fig.4] est une illustration schématisée de données d'image et d'une source lumineuse qui projette ces données d'image, y compris des capteurs de température, en accord avec un mode de réalisation préféré de l'invention ;
- [Fig.5] est une illustration de données de référence d'une source lumineuse pixélisée telles qu'elles interviennent dans un procédé en accord avec un mode de réalisation préféré de l'invention ;
- [Fig.6] est une illustration schématisée d'un ensemble lumineux en accord avec un mode de réalisation préféré de l'invention .

Sauf indication spécifique du contraire, des caractéristiques techniques décrites en détails pour un mode de réalisation donné peuvent être combinées aux caractéristiques techniques décrites dans le contexte d'autres modes de réalisation décrits à titre d'exemples et de manière non limitative.

La description se concentre sur les éléments d'un procédé de commande et d'un ensemble lumineux pour un véhicule automobile, qui sont nécessaires à la compréhension de l'invention. D'autres éléments, qui font par exemple de manière connue partie de tels ensembles, ne seront pas mentionnés ni décrits en détails. Par exemple, la présence d'un support ou d'éléments de dissipation thermique sont implicites pour le fonctionnement d'un tel module.

Un ensemble ou module lumineux pour un véhicule automobile tel qu'il intervient dans la mise en œuvre d'un procédé de pilotage en accord avec un premier mode de réalisation selon l'invention permet de projeter des fonctions d'éclairage à partir de données d'image. Le module comprend une source lumineuse apte à projeter un faisceau lumineux pixellisé. Une image comprend généralement une matrice de valeurs de pixels, chaque valeur correspondant à un degré de luminosité à réaliser par une source lumineuse élémentaire correspondante du module d'éclairage. De manière générale, la source lumineuse pixellisée est soit alimentée en tension électrique ou en courant électrique. Lorsque la source lumineuse pixellisée est alimentée en tension électrique, à un instant donné, la même tension électrique est appliquée aux bornes de chaque pixel, qui équivaut à une source élémentaire réalisée par un élément semi-conducteur électroluminescent miniaturisé. Le degré de luminosité à émettre par chaque pixel est commandé par le rapport cyclique d'un signal de commande à modulation de largeur d'impulsion PWM (« pulse width modulation ») qui branche et débranche le pixel de manière sélective et périodique. Pour un rapport cyclique de 100%, l'intensité du courant électrique moyen qui traverse un pixel est égale à son intensité maximale ou peak, ce qui engendre une luminosité maximale. Pours des degrés d'intensité inférieurs, un rapport cyclique inférieur engendre une valeur moyenne plus basse de l'intensité moyenne du courant électrique qui traverse le pixel. L'intensité de courant maximale est dépendante de la valeur de tension électrique appliquée à la source lumineuse pixellisée.

Lorsque la source lumineuse pixellisée est du type à être alimentée en courant électrique, elle incorpore généralement une source de courant électrique indépendamment pilotée pour chaque pixel. Le degré de luminosité à émettre par chaque pixel est commandé par une valeur d'intensité de courant électrique à fournir par la source de courant associée au pixel. Le rapport cyclique d'un signal de commande à modulation de largeur d'impulsion PWM (« pulse width modulation ») qui branche et débranche le pixel de manière sélective et périodique peut également influer sur la valeur moyenne de l'intensité de courant qui traverse le pixel, sans modifier la l'intensité nominale du courant électrique fourni au pixel.

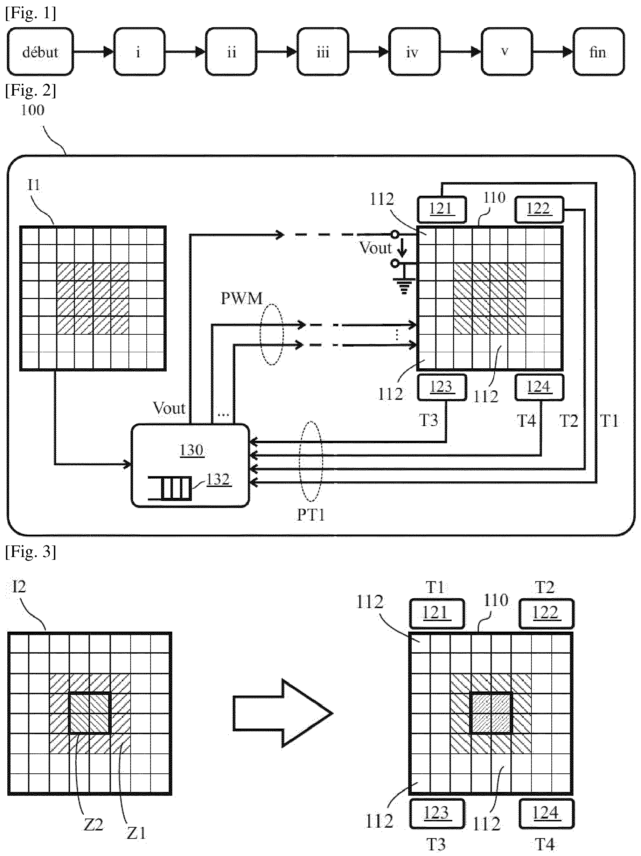

La [Fig.1] montre les étapes principales d'un procédé de pilotage selon un premier mode de réalisation de l'invention. A une première étape i, un premier niveau de tension électrique est fourni à une source lumineuse pixellisée destinée à être pilotée en tension. La source lumineuse pixellisée comprend une pluralité de sources lumineuses élémentaires de type diode électroluminescente. Chaque source lumineuse élémentaire est destinée à réaliser un pixel lumineux de l'image projetée par la source lumineuse pixellisée. Des données d'image représentent une image à projeter (par exemple un faisceau d'une forme particulière) et déterminent le degré de luminosité (typiquement entre 0 et 255) à réaliser par chaque source lumineuse élémentaire. A tension électrique égale et à température égale, chaque source lumineuse élémentaire est alimentée par un courant électrique d'une même intensité. Cette intensité maximale est réduite individuellement pour chaque source lumineuse élémentaire, en lui appliquant un signal de modulation de largeur d'impulsion du courant continu, fourni par une unité de commande réalisée par exemple par un élément microcontrôleur. Le rapport cyclique de ce signal impacte directement l'intensité moyenne de l'intensité du courant électrique qui alimente une source lumineuse élémentaire, qui est proportionnelle à la luminosité émise. On suppose donc que la source lumineuse pixellisée est alimentée moyennant une tension électrique ayant un premier niveau, et que chaque source lumineuse élémentaire est alimentée moyennant un courant électrique d'une première intensité, qui détermine la luminosité du pixel projeté qui lui correspond.

Lors d'une deuxième étape ii, une pluralité de capteurs de température disposés à des emplacements prédéterminés à proximité de la matrice de sources lumineuses élémentaires fournissent une indication de leur température ambiante à l'unité de commande. Ensuite, la position d'un point chaud de la source lumineuse pixellisée est estimée sur base des données d'image projetées, qui sont disponibles au niveau de l'unité de commande, et en utilisant le profil de température, qui est composé des mesures de températures obtenues. Idéalement, chaque capteur fournit une mesure qui fait partie du profil de température obtenu. Ceci correspond à l'étape iii. Lors de l'étape suivante iv, l'unité de commande évalue une valeur de température représentative de la température du point chaud ainsi déterminé. Idéalement, ce point chaud correspond au point le plus chaud de la source lumineuse pixellisée au moment de la mesure : il s'agit donc de la température de jonction la plus élevée parmi l'ensemble des sources lumineuses élémentaires. Si cette température est plus élevée qu'une valeur seuil prédéterminée, l'unité de commande produit une commande qui vise à réduire l'intensité moyenne du courant qui circule dans toutes les sources lumineuses élémentaires de la matrice, afin de garantir les différences de lumineuses relatives entre les pixels projetés, tout en réduisant le risque d'emballement thermique (correspondant à une surchauffe linéaire dans le temps) pour les sources lumineuses élémentaires à risque, i.e., celles qui sont les plus chaudes.

La [Fig.2] montre un ensemble lumineux 100 pour un véhicule automobile en accord avec un premier mode de réalisation. Le système illustré comprend une unité de commande 130 d'une source lumineuse pixellisée 110, par exemple de type monolithique. La source lumineuse pixellisée comprend une pluralité de sources lumineuse élémentaires 112 arrangées sous la forme d'une matrice. L'unité de commande peut par exemple comprendre, ou commander par le biais d'une connexion électrique, un circuit de pilotage de l'alimentation électrique de la source lumineuse pixellisée 110. De manière connue, de tels circuits de pilotage peuvent comprendre des circuits convertisseurs abaisseurs de tension, par exemple de type « buck », et des circuits convertisseurs élévateurs de tension, par exemple de type « boost ». Ces circuits sont en soi connus dans l'art et leur fonctionnement ne sera pas décrit en détails dans le cadre de la présente invention. Un circuit convertisseur permet notamment de convertir une tension électrique fournie à son entrée (non-illustrée) en une tension de sortie Vout, déterminée par l'unité de commande 130, et ayant une valeur différente de la tension d'entrée. Selon l'architecture choisie, la tension de sortie peut être supérieure ou inférieur à la tension d'entrée. De tels circuits sont communément utilisés dans le cadre de l'alimentation électrique de sources lumineuses à éléments semi-conducteurs électroluminescents, par exemple de type diode électroluminescente, LED. En effet, de telles sources lumineuses doivent être alimentées avec un niveau de tension au moins égal à la valeur de leur tension directe, qui peut être différente de la tension disponible, par exemple fournie par une batterie d'un véhicule automobile.

La source lumineuse pixélisée 110 est alimentée en tension électrique et peut comprendre des centaines ou des milliers de pixels 112. Les intensités lumineuses émises par les pixels individuels sont commandées par des signaux on/off périodiques PWM, comme décrit précédemment. L'unité de commande à accès à des données d'image I1, qui correspondent à au moins une image digitale, également appelée photométrie. Les photométries peuvent être stockées dans un élément de mémoire auquel l'unité de commande à un accès en lecture. Suite à un signal reçu d'une unité de commande central du véhicule automobile, l'unité de commande sélectionne alors une photométrie appropriée parmi une pluralité de photométries disponibles. Il est également possible que l'unité de commande 130 soit configurée pour générer une photométrie conforme à des instructions reçues sur un bus de données interne au véhicule automobile, non illustré. Alternativement, l'unité de commande 130 peut recevoir les données d'image Il sur un tel bus de données, par exemple de type CAN (« Car Area Network »). L'unité de commande 130 comprend de préférence des moyens de calculs configurés pour transformer les données d'images Il reçues pour chaque pixel de l'image en une tension d'alimentation Vout et des signaux PWM à destination de la source lumineuse pixellisée 110 et des sources lumineuses élémentaires 112 respectivement, afin qu'un faisceau lumineux conforme aux données Il soit projeté.

Bien qu'un degré de luminosité élevé entraine un échauffement plus important des sources lumineuses élémentaires correspondantes, l'échauffement des sources lumineuses élémentaires 112 ne peut en général pas être prédit de manière précise uniquement sur base des données de l'image Il projetée. Ceci est dû entre autres à des échauffements parasites causés par des sources lumineuses avoisinantes, à des imperfections des sources lumineuses dues à leurs procédés de fabrication respectifs, ou aux projections précédentes, qui peuvent engendrer de la chaleur résiduelle au niveau de plusieurs sources lumineuses élémentaires.

De préférence, la source lumineuse pixélisée 110 comprend une pluralité de capteurs de température 121, 122, 123, 124 physiquement rapprochés des jonctions semi-conductrices. Dans l'exemple de la [Fig.2] il s'agit de quatre capteurs, sans que l'invention ne soit limitée à cet exemple. Il peut par exemple s'agir d'un élément thermistor ou d'autres capteurs de température en soi connus dans l'art, ou avantageusement de capteurs de type PTAT (« Proportional To Asbolute Temperature »). La proximité à la matrice des sources lumineuses élémentaires permet aux capteurs de fournir une indication réaliste de la température de fonctionnement de régions de pixels de la source lumineuse pixellisée 110, lorsque cette dernière est alimentée en électricité. Selon un mode de réalisation préféré, une pluralité de capteurs de température peut être intégrée dans le substrat de la source lumineuse, et une pluralité d'indications de température, correspondant à une pluralité de zones ou à une pluralité de pixels, peuvent être fournies par le biais de signaux électriques T1, T2, T3, T4 à l'unité de commande 130, formant ainsi un profil de température PT1 correspondant à la projection de les données d'image Il.

Le profil de température fourni PT1 ne permet pas d'avoir accès aux valeurs de températures exactes de toutes les sources lumineuses élémentaires. Ainsi, lors de l'étape iii du procédé proposé, une position d'un point chaud est estimée par l'unité de commande. Dans l'exemple donnée, une zone centrale des données d'image Il est illuminée. Ainsi, les sources lumineuses élémentaires correspondantes au centre de la source lumineuse pixellisée 110 risquent de s'échauffer le plus lors de la projection de l'image Il. Cette zone est éloignée de tous les capteurs de températures 121, 122, 123, 124, dont les positions sont connues. Des indications similaires ou proches T1, T2, T3, T4 sont donc probables dans cet exemple. Inversement, un tel profil de température uniforme peut permettre à estimer que le point chaud se situe dans une zone centrale de la matrice.

Pourtant aucune de ces valeurs ne correspond à la température exacte de la zone centrale. Afin d'estimer la température de la zone centrale, l'unité de commande 130 peut par exemple avoir recours à une base de données comprenant des profils de températures prédéterminées, associées à des photométries I1, I2, ..., IN prédéterminées, et à des températures maximales correspondantes. Ces données peuvent par exemple être obtenues au préalable par simulation, ou par mesure à l'aide d'une caméra thermique au niveau des sources lumineuses élémentaires alors que celles-ci projettent les photométries correspondantes. En comparant le profil de température PT1 aux profils de la base de données, notamment en relation avec l'image Il projetée, l'unité de commande peut ainsi déterminer une température, ou un incrément de température, qu'il faudra rajouter aux valeurs du profil de température obtenu PT1, afin d'avoir une indication réaliste de la température en zone centrale, illuminée. Dans l'exemple fourni, pour la zone la plus éloignée des capteurs 121, 122, 123, 124 qui se trouvent aux coins de la matrice de pixels 110, l'incrément ΔT1 peut être d'une valeur comprise entre 15 et 30 °C, par exemple de 25 °C. La température estimée T est par exemple donnée par T2+ΔT1 °.

Les valeurs des incréments ou valeurs de températures enregistrées dans la base de données, qui dépendent des positions de points chauds déterminés, peuvent optionnellement être adaptées en fonction du temps de fonctionnement des capteurs de température, pour prendre en compte des erreurs de mesures dues à une variation de la sensibilité de capteurs, qui se détériore généralement au fil du temps de fonctionnement.

L'incrément dépend au moins de la position estimée du point chaud, de la position connue des capteurs de température, et de l'image projetée. La [Fig.3] donne un autre exemple. La photométrie I2 projetée comprend une première zone illuminée Z1 et une zone centrale plus restreinte Z2 en surbrillance. Les quatre sources lumineuses élémentaires 112 centrales présentent un risque de surchauffe prononcé. Cependant, à cause de la distance importante des capteurs 121, 122, 123, 124 de cette zone centrale, et pour manque de sensibilité, les valeurs de température T1, T2, T3, T4 sont très similaires à celles de l'exemple précédent. Pour déterminer la température de la zone centrale, il est donc intéressant de comparer les données d'image de la zone Z2 à celles de la zone Z1. Sachant que l'image I2 est projetée, et non-pas l'image I1, les données d'images permettent à l'unité de commande 130 de lever l'ambiguïté induite par le profil de température obtenu à lui tout seul, et de déterminer qu'un incrément ΔT2 plus important que ΔT1 est à rajouter aux températures obtenues par les capteurs, afin de fournir une estimation réaliste de la température la plus chaude de la source lumineuse pixellisée 110. En utilisant uniquement des valeurs de température, le point chaud de cet exemple ne peut être discerné du point chaud de l'exemple de la [Fig.3], alors que les quatre pixels centraux peuvent subir un échauffement nettement plus élevé, et présentent donc un risque d'emballement thermique plus prononcé. L'estimation plus précise permet à l'unité de commande 130 de réagir différemment, de manière mieux nuancée, dans les deux exemples de projection I1, I2 montrés.

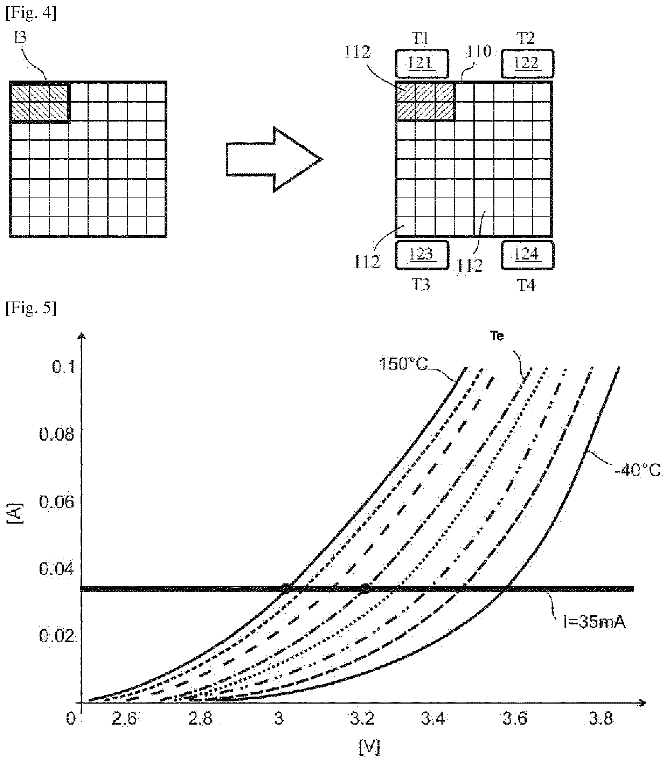

Un autre exemple est illustré par la [Fig.4]. La photométrie I3 qui est projetée comprend une zone illuminée en haut à gauche. Dans cet exemple, la valeur de température T1 sera nettement plus élevée que la températures T2, T3, T4. Ainsi le profil de température fourni par les capteurs permettra à lui tout seul d'évaluer la position du point chaud dans la zone en proximité directe du capteur 121 : il s'agit du quadrant en haut à gauche de matrice de pixels 110. La prise en compte des données d'image I3 permet optionnellement de raffiner cette estimation de position. Dans le cas montré, la valeur de température T1 est à incrémenter d'une valeur peu importante, voire d'un incrément nul pour arriver à une estimation correcte du point chaud. En effet, les sources lumineuses élémentaires susceptibles d'un sur-échauffement sont proches d'un des capteurs de températures disponibles.

Ainsi, après estimation de la position du point chaud de la source lumineuse pixellisée 110, l'unité de commande est configurée pour déterminer une estimation de la valeur de température T du point chaud, en dépendance de la position estimée, et de préférence en dépendance des données d'images I1, I2, I3 projetées. L'unité de commande 130 est en plus configurée pour déterminer, à partir du premier niveau de tension d'alimentation fourni, et à partir de la température correspondante estimée T du point chaud de la source lumineuse pixellisée, s'il y a un besoin d'abaisser l'intensité du courant électrique dans la source lumineuse pixellisée, afin d'éviter une situation d'emballement thermique.

Par exemple, si la température estimée T du point chaud dépasse une valeur seuil prédéterminée, le premier niveau de tension est ainsi abaissé à un deuxième niveau de tension plus bas. Ceci engendre que l'intensité du courant électrique maximale, ou peak, qui traverse les pixels 121 de la source lumineuse pixellisée 110 décroit, évitant ainsi une surchauffe des jonctions semi-conductrices correspondantes.

Selon un mode de réalisation préféré de l'invention, l'unité de commande 130 comprend, ou à un accès en écriture à, un élément de mémoire 132 (illustré en [Fig.2]) dans lequel des données de référence relatives à la source lumineuse pixellisée 110 sont enregistrées. Ces données peuvent par exemple être fournies au moment de la production ou du montage du module lumineux.

La [Fig.5] montre un exemple non-limitatif de données de référence qui peuvent être utilisées par l'unité de commande afin de réaliser l'étape v du procédé de commande en accord avec un mode de réalisation préféré de l'invention. Il s'agit de données qui caractérisent le comportement électro-thermique des pixels de la source lumineuse pixellisée.

Dans l'exemple montré, un dépassement d'une intensité seuil de courant électrique fixée à 35mA risque d'engendrer une défaillance permanente des pixels de la source lumineuse pixellisée. L'unité de commande veille donc à ce que ce seuil ne soit pas dépassé pendant une durée prolongée. Les données de référence fournissent, pour une plage de température de fonctionnement allant par exemple de -40°c à 150°C, des courbes associant la tension de pilotage (en Volt) à l'intensité du courant électrique résultant (en Ampères). Il devient apparent que la température seuil à laquelle l'indication de température T est comparée par l'unité de commande, peut dépendre de la valeur de la première tension électrique, initialement fournie à la source lumineuse pixellisée, et qui est à l'origine de la température T estimée du point chaud de la matrice. Par exemple, à une tension de 3.2 V, l'intensité de courant maximale est atteinte à une température Te, comme indiqué par l'intersection de la courbe Te et du plafond de courant seuil I. Si l'estimation de température T du point chaud obtenue par le procédé est supérieure à Te alors que le premier niveau de tension électrique de pilotage fourni est supérieur à 3.2 V, l'unité de commande ordonne la fourniture d'un deuxième niveau de tension de pilotage, inférieur à 3.2, au dispositif de pilotage. A l'inverse, à une tension initialement fournie de 3V, la température de fonctionnement Te du point chaud peut augmenter jusqu'à 150°C avant qu'une baisse de tension de pilotage ne soit ordonnée par l'unité de commande. L'application continue de ce procédé permet de réguler la température de manière dynamique sans risquer un effet d'emballement thermique. La valeur de seuil à laquelle l'indication de température estimée T du point chaud est comparée dépend donc du premier niveau de tension électrique fourni. Le deuxième niveau de tension électrique est choisi de manière à ce que le courant électrique maximal traversant les pixels de la source lumineuse pixellisée ne dépasse pas une intensité seuil maximale prédéterminée, par exemple de 35 mA.

Dans un mode réalisation alternatif, le niveau de tension Vout peut être maintenu au premier niveau, et pour réduire l'intensité moyenne des courants électriques qui circulent dans les sources lumineuses élémentaires, les signaux PWM commandant ces intensités de courant moyennes peuvent être adaptés en réduisant leurs rapport cycliques d'un facteur prédéterminé, de préférence identique pour toutes les sources lumineuses élémentaires. Une combinaison de l'adaptation de commande en tension et des signaux PWM peut également être envisagée sans pour autant sortir du cadre de la présente invention.

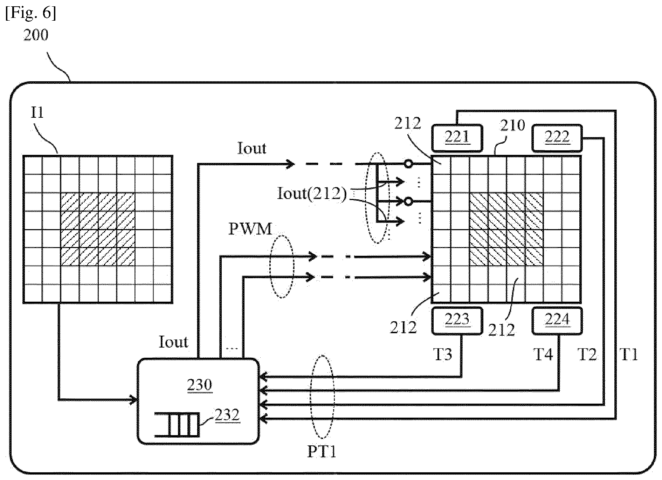

La [Fig.6] montre un mode de réalisation d'un ensemble lumineux 200 pour un véhicule automobile en accord avec un deuxième mode de réalisation. Ce mode de réalisation permet de réaliser les adaptations expliquées à titre d'exemple dans le contexte des [Fig.3]-5, lorsque la source lumineuse pixellisée est commandée en courant électrique.

Le système illustré comprend une unité de commande 230 d'une source lumineuse pixellisée 210. La source lumineuse pixellisée comprend une pluralité de sources lumineuse élémentaires 212 arrangées sous la forme d'une matrice. L'unité de commande peut par exemple comprendre, ou commander par le biais d'une connexion électrique, un circuit de pilotage de l'alimentation électrique de la source lumineuse pixellisée 210.

La source lumineuse pixélisée 210 est alimentée en courant électrique et peut comprendre des centaines ou des milliers de pixels 212. Les intensités lumineuses émises par les pixels individuels sont dépendantes des intensités de courant électrique respectives qui les traversent. Chaque pixel 212 est associé à une source de courant électrique qui lui est dédiée. Ces sources de courant électrique sont intégrées à la source lumineuse pixélisée 210. Suite à la réception d'une commande de courant Iout(212) pour un pixel 212, la source de courant électrique associée à ce pixel 212 est apte à fournir le courant de l'intensité correspondante au pixel. Les pixels peuvent également être commandé par des signaux on/off périodiques PWM, comme décrit précédemment : à courant électrique nominal constant, la modulation du signal PWM permet d'agir sur l'intensité moyenne du courant électrique qui traverse un pixel. L'unité de commande 230 a accès à des données d'image I1, qui correspondent à au moins une image digitale, également appelée photométrie. Les photométries peuvent être stockées dans un élément de mémoire auquel l'unité de commande à un accès en lecture. Suite à un signal reçu d'une unité de commande central du véhicule automobile, l'unité de commande sélectionne alors une photométrie appropriée parmi une pluralité de photométries disponibles. Il est également possible que l'unité de commande 230 soit configurée pour générer une photométrie conforme à des instructions reçues sur un bus de données interne au véhicule automobile, non illustré. Alternativement, l'unité de commande 230 peut recevoir les données d'image Il sur un tel bus de données, par exemple de type CAN (« Car Area Network »). L'unité de commande 230 comprend de préférence des moyens de calculs configurés pour transformer les données d'images I1 reçues pour chaque pixel de l'image en valeurs d'intensités de courant Iout(212) pour chaque pixel 212, regroupée dans le signal de commande Iout, et en signaux PWM à destination de la source lumineuse pixellisée 210 et des sources lumineuses élémentaires 212 respectivement, afin qu'un faisceau lumineux conforme aux données Il soit projeté.

Bien qu'un degré de luminosité élevé entraine un échauffement plus important des sources lumineuses élémentaires correspondantes, l'échauffement des sources lumineuses élémentaires 212 ne peut en général pas être prédit de manière précise uniquement sur base des données de l'image Il projetée. Ceci est dû entre autres à des échauffements parasites causés par des sources lumineuses avoisinantes, à des imperfections des sources lumineuses dues à leurs procédés de fabrication respectifs, ou aux projections précédentes, qui peuvent engendrer de la chaleur résiduelle au niveau de plusieurs sources lumineuses élémentaires.

De préférence, la source lumineuse pixélisée 210 comprend une pluralité de capteurs de température 221, 222, 223, 224 physiquement rapprochés des jonctions semi-conductrices. Dans l'exemple de la [Fig.6] il s'agit de quatre capteurs, sans que l'invention ne soit limitée à cet exemple. Il peut par exemple s'agir d'un élément thermistor ou d'autres capteurs de température en soi connus dans l'art, ou avantageusement de capteurs de type PTAT (« Proportional To Asbolute Temperature »). La proximité à la matrice des sources lumineuses élémentaires permet aux capteurs de fournir une indication réaliste de la température de fonctionnement de régions de pixels de la source lumineuse pixellisée 210, lorsque cette dernière est alimentée en électricité. Selon un mode de réalisation préféré, une pluralité de capteurs de température peut être intégrée dans le substrat de la source lumineuse, et une pluralité d'indications de température, correspondant à une pluralité de zones ou à une pluralité de pixels, peuvent être fournies par le biais de signaux électriques T1, T2, T3, T4 à l'unité de commande 230, formant ainsi un profil de température PT1 correspondant à la projection de les données d'image Il.

Le profil de température fourni PT1 ne permet pas d'avoir accès aux valeurs de températures exactes de toutes les sources lumineuses élémentaires. Ainsi, lors de l'étape iii du procédé proposé, une position d'un point chaud est estimée par l'unité de commande. Dans l'exemple donnée, une zone centrale des données d'image Il est illuminée. Ainsi, les sources lumineuses élémentaires correspondantes au centre de la source lumineuse pixellisée 210 risquent de s'échauffer le plus lors de la projection de l'image Il. Cette zone est éloignée de tous les capteurs de températures 121, 122, 123, 124, dont les positions sont connues. Des indications similaires ou proches T1, T2, T3, T4 sont donc probables dans cet exemple. Inversement, un tel profil de température uniforme peut permettre à estimer que le point chaud se situe dans une zone centrale de la matrice.

Pourtant aucune de ces valeurs ne correspond à la température exacte de la zone centrale. Afin d'estimer la température de la zone centrale, l'unité de commande 230 peut par exemple avoir recours à une base de données comprenant des profils de températures prédéterminées, associées à des photométries I1, I2, ..., IN prédéterminées, et à des températures maximales correspondantes. Ces données peuvent par exemple être obtenues au préalable par simulation, ou par mesure à l'aide d'une caméra thermique au niveau des sources lumineuses élémentaires alors que celles-ci projettent les photométries correspondantes. En comparant le profil de température PT1 aux profils de la base de données, notamment en relation avec l'image Il projetée, l'unité de commande peut ainsi déterminer une température, ou un incrément de température, qu'il faudra rajouter aux valeurs du profil de température obtenu PT1, afin d'avoir une indication réaliste de la température en zone centrale, illuminée. Dans l'exemple fourni, pour la zone la plus éloignée des capteurs 221, 222, 223, 224 qui se trouvent aux coins de la matrice de pixels 210, l'incrément ΔT1 peut être d'une valeur comprise entre 15 et 30 °C, par exemple de 25 °C. La température estimée T est par exemple donnée par T2+ΔT1 °.

Les valeurs des incréments ou valeurs de températures enregistrées dans la base de données, qui dépendent des positions de points chauds déterminés, peuvent optionnellement être adaptées en fonction du temps de fonctionnement des capteurs de température, pour prendre en compte des erreurs de mesures dues à une variation de la sensibilité de capteurs, qui se détériore généralement au fil du temps de fonctionnement.

Après l'estimation de la position du point chaud de la source lumineuse pixellisée 210, l'unité de commande 230 est configurée pour déterminer une estimation de la valeur de température T du point chaud, en dépendance de la position estimée, et de préférence en dépendance des données d'images Il projetées. L'unité de commande 230 est en plus configurée pour déterminer, à partir d'une première intensité de courant électrique fournie qui a été fournie à la région de la source lumineuse 210 comprenant la position du point chaud, et à partir de la température correspondante estimée T du point chaud de la source lumineuse pixellisée, s'il y a un besoin d'abaisser l'intensité du courant électrique dans la source lumineuse pixellisée, afin d'éviter un sur-échauffement.

Par exemple, si la température estimée T du point chaud dépasse une valeur seuil prédéterminée, le premier niveau d'intensité de courant électrique est ainsi abaissé à un deuxième niveau d'intensité de courant électrique plus bas. Ceci engendre que l'intensité du courant électrique maximale, ou peak, qui traverse les pixels correspondants au point chaud 221 de la source lumineuse pixellisée 210 décroit, évitant ainsi une surchauffe des jonctions semi-conductrices correspondantes.

L'application de l'intensité du courant électrique abaissée est réalisée par une commande Iout qui regroupe des consignes d'intensité de courant électrique Iout(212) soit pour des sources lumineuses élémentaires 212 spécifiques, soit pour un groupe de sources lumineuses élémentaires, comprenant de préférence la position du point chaud identifiée, soit pour toutes les sources lumineuses élémentaires 212 de la source lumineuse pixélisée.

Dans un mode réalisation alternatif, le niveau de tension Iout peut être maintenu au premier niveau, et pour réduire l'intensité moyenne des courants électriques qui circulent dans les sources lumineuses élémentaires, les signaux PWM commandant ces intensités de courant moyennes peuvent être adaptés en réduisant leurs rapport cycliques d'un facteur prédéterminé. Une combinaison de l'adaptation de commande en courant peak et des signaux PWM peut également être envisagée sans pour autant sortir du cadre de la présente invention.

Il va de soi que les modes de réalisation décrits ne limitent pas l'étendue de la protection de l'invention. En faisant recours à la description qui vient d'être donnée, d'autres modes de réalisation sont envisageables sans pour autant sortir du cadre de la présente invention.

L'étendue de la protection est déterminée par les revendications.

## Revendications

1. Procédé de commande d'une source lumineuse pixellisée (110, 210) pour un véhicule automobile, la source lumineuse pixellisée comprenant une pluralité de sources lumineuses élémentaires (112, 212) à élément semi-conducteur électroluminescent, le procédé comprenant au moins les étapes de:
i. commander, moyennant une unité de commande (130, 230), la source lumineuse pixellisée de manière à projeter un faisceau lumineux correspondant à des données d'image (I1, I2, I3), en pilotant chaque source lumineuse élémentaire par un signal de commande (Vout, Iout, PWM) qui détermine une première intensité moyenne du courant électrique qui la traverse;
ii. obtenir, moyennant une pluralité de capteurs de température (121, 122, 123, 124 ; 212, 222, 223, 224) disposés à des emplacements prédéterminés, un profil de température (PT1) de la source lumineuse pixellisée;
iii. estimer, moyennant l'unité de commande, la position d'un point chaud de la source lumineuse pixellisée sur base des données d'image (I1) et du profil de température obtenu (PT1);
iv. estimer, moyennant l'unité de commande, une valeur de température dudit point chaud en fonction du profil de température obtenu et de sa position estimée par rapport aux emplacements des capteurs de température ;
v. modifier, moyennant l'unité de commande (130, 230), la commande (Vout, Iout, PWM) de la source lumineuse pixellisée (110, 210) de manière à ce que au moins un groupe des sources lumineuses élémentaires (112, 212) comprenant la source lumineuse élémentaire qui se situe à la position estimée du point chaud, soit traversé par un courant électrique d'une deuxième intensité moyenne, inférieure à la première intensité, si la valeur de température estimée est supérieure à une valeur de température seuil prédéterminée
**caractérisé en ce que** l'étape d'estimation de la position d'un point chaud iii comprend la recherche du profil de température obtenu (PT1) parmi une pluralité de profils de température préenregistrés dans un élément de mémoire, chaque profil étant associé à des données d'image (I1, I2, I3) particulières et à une position de point chaud associée à ces données.

2. Procédé de commande selon la revendication 1, **caractérisé en ce que** l'étape d'estimation d'une valeur de température dudit point chaud iv comprend une étape d'incrémentation d'au moins une des valeurs de température (T1, T2, T3, T3) du profil de température obtenu (PT1), à l'aide d'un incrément prédéterminé qui dépend de la position estimée du point chaud.

3. Procédé de commande selon la revendication précédente, **caractérisé en ce que** l'étape d'estimation d'une valeur de température iv comprend en outre la prise en compte des données d'image projetées (I1, I2, I3), une valeur de luminosité élevée d'un pixel correspondant à une source lumineuse élémentaire (112) chaude.

4. Procédé de commande selon une des revendications précédentes, **caractérisé en ce que** la source lumineuse pixellisée (110) est destinée à être commandée en tension électrique, **en ce que** la commande qui détermine une première intensité moyenne du courant électrique qui traverse chaque source lumineuse élémentaire comprend un premier niveau de tension électrique (Vout), et **en ce que** l'étape de modification de la commande v comprend une étape de fournir un deuxième niveau de tension électrique, moins élevé que le premier niveau de tension électrique (Vout), à la source lumineuse pixellisée (110) si la valeur de température estimée est supérieure à une valeur de température seuil prédéterminée.

5. Procédé de commande selon la revendication précédente, **caractérisé en ce que** l'étape de modification de la commande v comprend une étape préalable de comparaison de ladite valeur de température estimée à ladite valeur de température seuil prédéterminée, la valeur de température seuil prédéterminée étant dépendante du premier niveau de tension électrique fourni.

6. Procédé de commande selon une des deux revendications précédentes, **caractérisé en ce qu'**il comprend une étape préliminaire de mise à disposition, dans un élément de mémoire (132), de données de référence relatives à la source lumineuse pixellisée (110), qui mettent en relation, pour une rangée de températures de fonctionnement de la source lumineuse pixellisée, des valeurs de tension de pilotage avec des intensités de courant d'alimentation correspondantes, et **en ce que** l'étape de modification de la commande comprend le choix du deuxième niveau de tension électrique en dépendance de la valeur température estimée, afin de respecter une intensité de courant électrique seuil prédéterminée.

7. Procédé de commande selon une des revendications 1 à 3, **caractérisé en ce que** la source lumineuse pixellisée (210) est destinée à être commandée en courant électrique, **en ce que** la commande (Iout) qui détermine une première intensité moyenne du courant électrique qui traverse chaque source lumineuse comprend une première intensité de courant électrique pour chaque source lumineuse élémentaire (lout(212)), et **en ce que** l'étape de modification de la commande v comprend une étape de fournir un deuxième niveau d'intensité de courant électrique, moins élevé que le premier niveau d'intensité de courant électrique, au moins à un groupe de sources lumineuses élémentaires de la source lumineuse pixellisée (210) si la valeur de température estimée est supérieure à une valeur de température seuil prédéterminée.

8. Procédé de commande selon une des revendications précédentes, **caractérisé en ce que** l'étape de modification de la commande comprend une étape de pilotage de chaque source lumineuse élémentaire (112, 212) par un signal de modulation de largeur d'impulsion (PWM) du courant continu qui détermine une deuxième intensité moyenne du courant électrique qui la traverse, la deuxième intensité moyenne étant inférieure à la première intensité moyenne, si la température estimée est supérieure à une valeur de température seuil prédéterminée.

9. Ensemble lumineux (100, 200) pour un véhicule automobile, comprenant une source lumineuse pixellisée (110, 210) ayant une pluralité de sources lumineuses élémentaires à élément semi-conducteur électroluminescent (112, 212), une pluralité de capteurs de température (121, 122, 123, 124)) destinés à fournir un profil de température (PT1, T1, T2, T3, T4) de la source lumineuse pixellisée lorsqu'elle projette des données d'images (I1, I2, I3), et une unité de commande (130, 230), **caractérisé en ce que** l'unité de commande est configurée pour commander la source lumineuse pixellisée en dépendance d'une valeur de température estimée d'un point chaud de la source lumineuse pixellisée, qui dépend d'une position estimée du point chaud et des données d'image, dans lequel l'unité de commande (130, 230) est configurée pour réaliser les étapes selon l'une quelconque des revendications 1 à 8.

10. Ensemble lumineux selon la revendication 9, **caractérisé en ce que** l'ensemble comprend un élément de mémoire fonctionnellement relié à l'unité de commande et comprenant des données de référence préenregistrées relatives à la source lumineuse pixellisée.

## Patentansprüche

1. Verfahren zum Steuern einer pixelierten Lichtquelle (110, 210) für ein Kraftfahrzeug, wobei die pixelierte Lichtquelle eine Vielzahl von elementaren, auf elektrolumineszenten Halbleiterkomponenten basierenden Lichtquellen (112, 212) umfasst, wobei das Verfahren mindestens die folgenden Schritte umfasst:
i. Steuern der pixelierten Lichtquelle mittels einer Steuereinheit (130, 230), um einen Lichtstrahl entsprechend Bilddaten (I1, I2, 13) zu projizieren, indem jede Elementarlichtquelle mit einem Steuersignal (Vout, lout, PWM) angesteuert wird, das eine erste durchschnittliche Amplitude des durch die Elementarlichtquelle fließenden Stroms bestimmt;
ii. Ermitteln eines Temperaturprofils (PT1) der pixelierten Lichtquelle mittels einer Vielzahl von an vorbestimmten Stellen angeordneten Temperatursensoren (121, 122, 123, 124; 212, 222, 223, 224);
iii. Schätzen der Position eines Hotspots der pixelierten Lichtquelle mittels der Steuereinheit auf der Grundlage der Bilddaten (11) und des ermittelten Temperaturprofils (PT1);
iv. Schätzen eines Temperaturwerts des Hotspots mittels der Steuereinheit in Abhängigkeit von dem erhaltenen Temperaturprofil und seiner geschätzten Position in Bezug auf die Positionen der Temperatursensoren;
v. Modifizieren, mittels der Steuereinheit (130, 230), den an die pixelierte Lichtquelle (110, 210) abgegebenen Befehl (Vout, lout, PWM) so, dass durch mindestens eine Gruppe der Elementarlichtquellen (112, 212), die die an der geschätzten Position des Hotspots befindliche Elementarlichtquelle umfasst, ein Strom mit einer zweiten mittleren Amplitude fließt, die niedriger ist als die erste Amplitude, wenn der geschätzte Temperaturwert höher ist als ein vorbestimmter Schwellenwert
**dadurch gekennzeichnet, dass** Schritt iii des Schätzens der Position eines Hotspots das Suchen nach dem erhaltenen Temperaturprofil (PT1) unter einer Vielzahl von zuvor in einem Speicherelement gespeicherten Temperaturprofilen umfasst, wobei jedes Profil bestimmten Bilddaten (11, I2, 13) und einer diesen Daten zugeordneten Hotspot-Position zugeordnet ist.

2. Steuerverfahren nach Anspruch 1, **dadurch gekennzeichnet, dass** Schritt iv zum Schätzen eines Temperaturwerts des Hotspots einen Schritt umfasst, bei dem mindestens einer der Temperaturwerte (T1, T2, T3, T3) des erhaltenen Temperaturprofils (PT1) unter Verwendung eines vorbestimmten Inkrements, das von der geschätzten Position des Hotspots abhängt, erhöht wird.

3. Das Steuerverfahren nach dem vorstehenden Anspruch, **dadurch gekennzeichnet, dass** Schritt iv des Schätzens eines Temperaturwerts ferner das Berücksichtigen der projizierten Bilddaten (11, I2, 13) umfasst, wobei ein hoher Helligkeitswert eines Pixels einer heißen elementaren Lichtquelle (112) entspricht.

4. Das Steuerverfahren nach einem der vorstehenden Ansprüche, **dadurch gekennzeichnet, dass** die pixelierte Lichtquelle (110) spannungsgesteuert sein soll, dass der Befehl, der eine erste durchschnittliche Amplitude des durch jede Elementarlichtquelle fließenden Stroms bestimmt, einen ersten Spannungspegel (Vout) umfasst, und dass der Schritt v zum Modifizieren des Befehls einen Schritt umfasst, bei dem ein zweiter Spannungspegel, der niedriger ist als der erste Spannungspegel (Vout), an die pixelierte Lichtquelle (110) angelegt wird, wenn der geschätzte Temperaturwert höher ist als ein vorbestimmter Schwellenwert für die Temperatur.

5. Das Steuerverfahren nach dem vorstehenden Anspruch, **dadurch gekennzeichnet, dass** der Schritt v zum Modifizieren des Befehls einen vorhergehenden Schritt umfasst, bei dem der geschätzte Temperaturwert mit dem vorbestimmten Schwellenwert verglichen wird, wobei der vorbestimmte Schwellenwert von dem zugeführten ersten Spannungspegel abhängt.

6. Steuerverfahren nach einem der beiden vorstehenden Ansprüche, **dadurch gekennzeichnet, dass** es einen vorbereitenden Schritt umfasst, bei dem in einem Speicherelement (132) Referenzdaten bezüglich der pixelierten Lichtquelle (110) bereitzustellen, wobei sich diese Daten für eine Reihe von Betriebstemperaturen der pixelierten Lichtquelle auf Ansteuerspannungswerte mit entsprechenden Versorgungsstromamplituden beziehen, und dass der Schritt des Modifizierens des Befehls das Auswählen des zweiten Spannungspegels in Abhängigkeit vom geschätzten Temperaturwert umfasst, um eine vorbestimmte Schwellstromamplitude einzuhalten.

7. Steuerverfahren nach einem der Ansprüche 1 bis 3, **dadurch gekennzeichnet, dass** die pixelierte Lichtquelle (210) stromsteuerbar ist, dass der Befehl (Iout), der eine erste durchschnittliche Amplitude des durch jede Lichtquelle fließenden Stroms ( ) bestimmt, eine erste Stromamplitude (lout(212)) für jede Elementarlichtquelle umfasst, und dass der Schritt v zum Modifizieren des Befehls einen Schritt umfasst, bei dem ein zweiter Strompegel, der niedriger ist als der erste Strompegel, an mindestens eine Gruppe von Elementarlichtquellen der pixelierten Lichtquelle (210) abgegeben wird, wenn der geschätzte Temperaturwert höher ist als ein vorbestimmter Schwellentemperaturwert.

8. Steuerverfahren nach einem der vorstehenden Ansprüche, **dadurch gekennzeichnet, dass** der Schritt des Modifizierens des Befehls einen Schritt des Ansteuerns jeder Elementarlichtquelle (112, 212) mit einem Gleichstrommodulierenden Pulsweitenmodulationssignal (PWM) anzusteuern, das eine zweite durchschnittliche Amplitude des durch die Elementarlichtquelle fließenden Stroms bestimmt, wobei die zweite durchschnittliche Amplitude niedriger ist als die erste durchschnittliche Amplitude, wenn die geschätzte Temperatur höher ist als ein vorbestimmter Schwellentemperaturwert.

9. Eine Leuchtbaugruppe (100, 200) für ein Kraftfahrzeug, umfassend eine pixelierte Lichtquelle (110, 210) mit einer Vielzahl von elementaren, auf elektrolumineszenten Halbleiterkomponenten basierenden Lichtquellen (112, 212), eine Vielzahl von Temperatursensoren (121, 122, 123, 124), die dazu bestimmt sind, ein Temperaturprofil (PT1, T1, T2, T3, T4) der pixelierten Lichtquelle zu liefern, wenn diese Bilddaten (11, I2, 13) projiziert, und eine Steuereinheit (130, 230), **dadurch gekennzeichnet, dass** die Steuereinheit so konfiguriert ist, dass sie die pixelierte Lichtquelle in Abhängigkeit von einem geschätzten Temperaturwert eines Hotspots der pixelierten Lichtquelle steuert, der von einer geschätzten Position des Hotspots und von den Bilddaten abhängt, wobei die Steuereinheit (130, 230) so konfiguriert ist, dass sie Schritte gemäß einem der Ansprüche 1 bis 8 ausführt.

10. Die Lichtemissionsbaugruppe nach Anspruch 9, **dadurch gekennzeichnet, dass** die Baugruppe ein Speicherelement umfasst, das funktional mit der Steuereinheit verbunden ist und vorab aufgezeichnete Referenzdaten bezüglich der pixelierten Lichtquelle enthält.

## Claims

1. A method for controlling a pixelated light source (110, 210) for a motor vehicle, the pixelated light source comprising a plurality of elementary electroluminescent-semiconductor-component-based light sources (112, 212), the method comprising at least the steps of:
i. controlling, by means of a control unit (130, 230), the pixelated light source so as to project a light beam corresponding to image data (11, I2, I3), by driving each elementary light source with a control signal (Vout, lout, PWM) that determines a first average amplitude of the current passing through said elementary light source;
ii. obtaining, by means of a plurality of temperature sensors (121, 122, 123, 124; 212, 222, 223, 224) placed at predetermined locations, a temperature profile (PT1) of the pixelated light source;
iii. estimating, by means of the control unit, the position of a hot spot of the pixelated light source on the basis of the image data (11) and of the obtained temperature profile (PT1);
iv. estimating, by means of the control unit, a temperature value of said hot spot depending on the obtained temperature profile and on its estimated position with respect to the locations of the temperature sensors;
v. modifying, by means of the control unit (130, 230), the command (Vout, lout, PWM) delivered to the pixelated light source (110, 210) so that at least one group of the elementary light sources (112, 212) comprising the elementary light source that is located at the estimated position of the hot spot is passed through by a current of a second average amplitude lower than the first amplitude, if the estimated temperature value is higher than a predetermined threshold temperature value
**characterized in that** step iii of estimating the position of a hot spot comprises searching for the obtained temperature profile (PT1) among a plurality of pre-recorded temperature profiles stored beforehand in a memory element, each profile being associated with particular image data (11, I2, 13) and with a hotspot position associated with these data.

2. The control method as claimed in claim 1, **characterized in that** step iv of estimating a temperature value of said hot spot comprises a step of incrementing at least one of the temperature values (T1, T2, T3, T3) of the obtained temperature profile (PT1), using a predetermined increment that depends on the estimated position of the hot spot.

3. The control method as claimed in the preceding claim, **characterized in that** step iv of estimating a temperature value further comprises taking into account the projected image data (11, I2, I3), a high luminosity value of a pixel corresponding to a hot elementary light source (112).

4. The control method as claimed in one of the preceding claims, **characterized in that** the pixelated light source (110) is intended to be voltage-controlled, **in that** the command that determines a first average amplitude of the current passing through each elementary light source comprises a first voltage level (Vout), and **in that** step v of modifying the command comprises a step of delivering a second voltage level, lower than the first voltage level (Vout), to the pixelated light source (110) if the estimated temperature value is higher than a predetermined threshold temperature value.

5. The control method as claimed in the preceding claim, **characterized in that** step v of modifying the command comprises a prior step of comparing said estimated temperature value with said predetermined threshold temperature value, the predetermined threshold temperature value being dependent on the delivered first voltage level.

6. The control method as claimed in one of the two preceding claims, **characterized in that** it comprises a preliminary step of making available, in a memory element (132), reference data relative to the pixelated light source (110), said data relating, for a row of operating temperatures of the pixelated light source, driving voltage values with corresponding supply-current amplitudes, and **in that** the step of modifying the command comprises choosing the second voltage level depending on the estimated temperature value, in order to respect a predetermined threshold current amplitude.

7. The control method as claimed in one of claims 1 to 3, **characterized in that** the pixelated light source (210) is intended to be current-controlled, **in that** the command (lout) that determines a first average amplitude of the current passing through each light source comprises a first current amplitude (lout(212)) for each elementary light source, and **in that** step v of modifying the command comprises a step of delivering a second current level, lower than the first current level, to at least one group of elementary light sources of the pixelated light source (210) if the estimated temperature value is higher than a predetermined threshold temperature value.

8. The control method as claimed in one of the preceding claims, **characterized in that** the step of modifying the command comprises a step of driving each elementary light source (112, 212) with a DC-current-modulating pulse-width-modulation signal (PWM) that determines a second average amplitude of the current passing through said elementary light source, the second average amplitude being lower than the first average amplitude if the estimated temperature is higher than a predetermined threshold temperature value.

9. A light-emitting assembly (100, 200) for a motor vehicle, comprising a pixelated light source (110, 210) having a plurality of elementary electroluminescent-semiconductor-component-based light sources (112, 212), a plurality of temperature sensors (121, 122, 123, 124) intended to deliver a temperature profile (PT1, T1, T2, T3, T4) of the pixelated light source when it is projecting image data (11, I2, I3), and a control unit (130, 230), **characterized in that** the control unit is configured to control the pixelated light source depending on an estimated temperature value of a hot spot of the pixelated light source, which depends on an estimated position of the hot spot and on the image data, wherein. the control unit (130, 230) is configured to carry out steps as claimed in any one of claims 1 to 8.

10. The light-emitting assembly as claimed in in claim 9, **characterized in that** the assembly comprises a memory element functionally connected to the control unit and comprising pre-recorded reference data relative to the pixelated light source.
